# EUROPEAN PATENT SPECIFICATION

(11) **EP 1 843 145 B1**
(45) Date of publication and mention of the grant of the patent: **02.06.2010**
(21) Application number: 07006685.7
(22) Date of filing: 30.03.2007
(51) Int. Cl.: G01N 21/57, G01N 21/95, B62D 65/00, G01B 11/30

(54) **Paint defect detecting machine**
Farbfehlerdetektionsgerät
Machine de détection des défauts de peinture

(30) Priority: 03.04.2006 JP 2006101507
(43) Date of publication of application: 10.10.2007
(73) Proprietor: Chuo Electronic Measurement Co., Ltd, Hiroshima-shi Hiroshima (JP)
(72) Inventor: Kaya, Toshiyuki, Hiroshima-shi Hiroshima (JP)
(74) Representative: HOFFMANN EITLE

(56) References cited:
- EP-A- 1 092 973
- EP-A- 1 327 852
- JP-A- 2004 198 403
- US-A- 5 477 268
- US-A1- 2002 136 009

## Description

### BACKGROUND OF THE INVENTION

### 1. Field of the Invention

The present invention relates to a paint defect detecting machine usable for multiple curved surfaces of a vehicle body.

### 2. Description of the Related Art

Hitherto, means for detecting a coated surface of a vehicle body by using an image processing apparatus is provided. It has already been verified that an illumination section for image capturing by using an imaging camera in the field of image processing techniques in a coating inspection apparatus is configured in a manner that recently developed high luminance LEDs are arranged into a honeycomb shape, and the effect of causing a defect to "float from peripheral illumination" is very effective, such as disclosed in, for example, JP-A-2004-198403, JP-A-2005-291842, JP-A-2005-291843, JP-A-2005-291844, JP-A-2005-148047, JP-A-2005-291845, JP-A-2005-315841, JP-A-2006-184080 and JP-A-2006-343185.

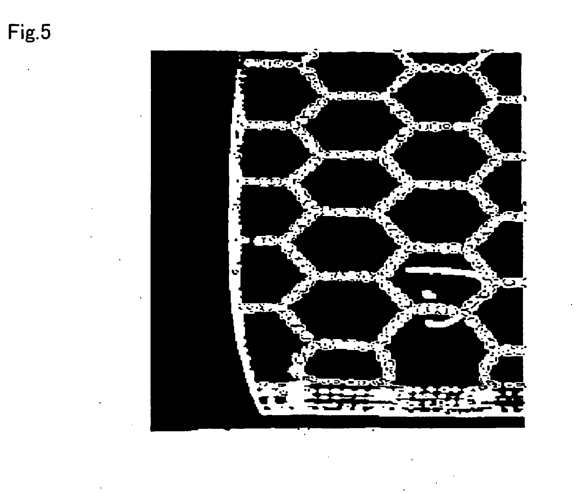

However, in multiple curved surface areas of a vehicle body (especially multiple curved surface areas on the same screen of a camera view field), reflected illumination light (honeycomb-shaped LED illumination) approaches, or a defect and illumination assimilate with one another, thereby resulting in overlooking of the defect (refer to FIG. 5). As a result, the area is recognized to be an undetectable area.

Accordingly, on the basis of the related prior arts disclosed in JP-A-2004-198403, JP-A-2005-291842, JP-A-2005-291843, JP-A-2005-291844, JP-A-2005-148047, JP-A-2005-291845, JP-A-2005-315841, JP-A-2006-184080 and JP-A-2006-343185, the present invention is to develop and provide a paint defect detecting machine in which a camera section and an illumination section are provided on a same base board to thereby optimize the illuminating method for multiple curved surface areas of a vehicle body (especially multiple curved surface areas on the same screen of a camera view field), that is, arrangement of same units is changed, thereby to solve the problems in the manner that undetectable areas are minimized and areas detectable by the apparatus are increased, whereby areas for human-eye detection are reduced and labor saving is implemented.

Moreover, US-A-5,477,268 discloses a machine having the features defined in the preamble of claim 1.

EP-A-1 092 973 and EP-A-1 327 852 A1 furthermore describe the arrangement of a light source in a stripe form.

US-A-2002/0136009 further describes the disposal of LEDs in combination with a cylindrical lens in order to focus the light emitted by the LEDs on a point on a surface to be inspected.

### SUMMARY OF THE INVENTION

According to the present invention, there is provided a paint defect detecting machine according to claim 1, which is usable for coating inspection of multiple curved surfaces of a vehicle, and in which high luminance light emitting devices (LEDs) are used as light emitting elements. Embodiments are named in the dependent claims. The respective high luminance LEDs are arranged linearly and in plural rows such that cameras and illuminations in an image processing apparatus mounted to an end of a robot can be used for multiple curved surfaces of a vehicle body, and that optimal image processing can be performed corresponding to all coating colors, types of coated surfaces, levels of brightness, and types of defects.

According to the present invention, 95% or larger detection area of the overall coated surface of the vehicle body is secured, and the areas of inspection by the human eye in the conventional manner are minimized, thereby to provide significant labor saving effects. Further, the components are angularly arranged to enable handling, especially, multiple curved surfaces presented within the same curved surface as the camera view field of the image processing apparatus, so that illuminance attenuation can be suppressed. Moreover, very advantageous effects are exhibited in that, for example, optimal image processing can be performed for all coating colors, types of coated surfaces, levels of brightness, and types of defects.

### BRIEF DESCRIPTION OF THE DRAWINGS

FIG. 1A and FIG. 1B are views showing an illumination unit for use in the present invention, in which FIG. 1A is a front view and FIG. 1B is a plan view;
FIG. 2 is a front view showing details of the illumination unit for use in the present invention;
FIG. 3A and FIG. 3B are views showing details of the illumination unit for use in the present invention, in which FIG. 3A is a front view and FIG. 3B is a side view;

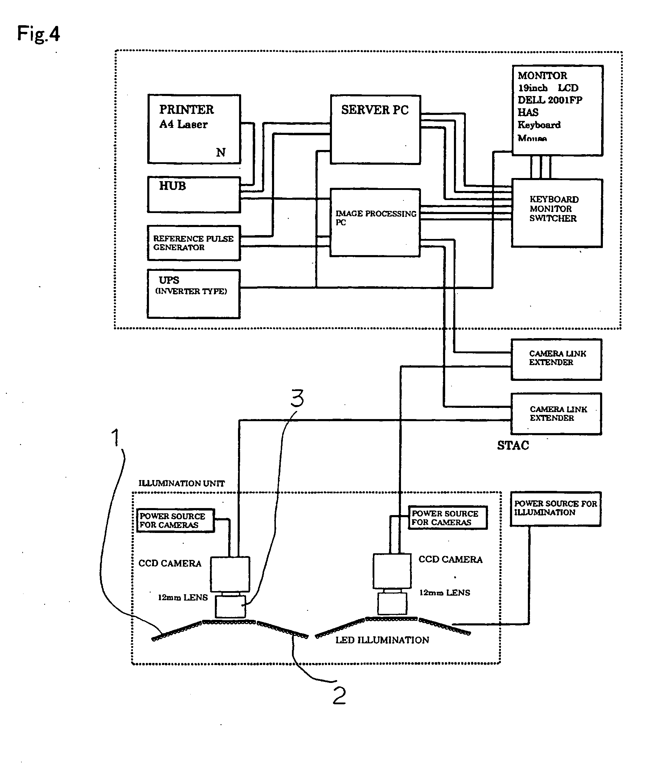

FIG. 4 is a block diagram showing the entirety of a paint defect detecting machine of the present invention; and
FIG. 5 is a perspective view showing a conventional LED arrangement state.

### DESCRIPTION OF THE PREFERRED EMBODIMENT

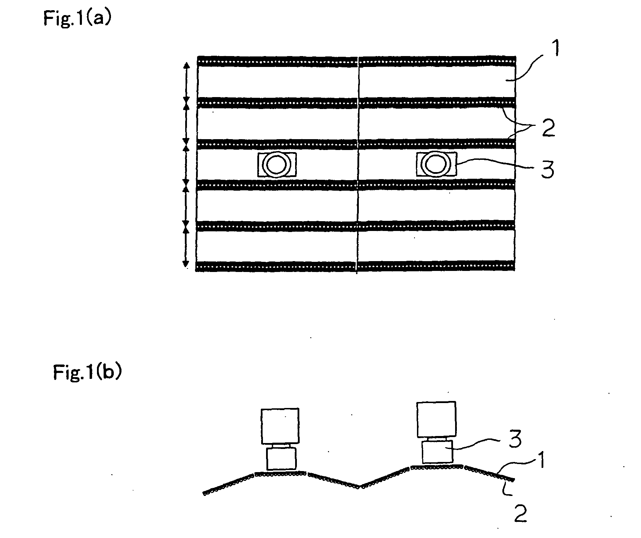

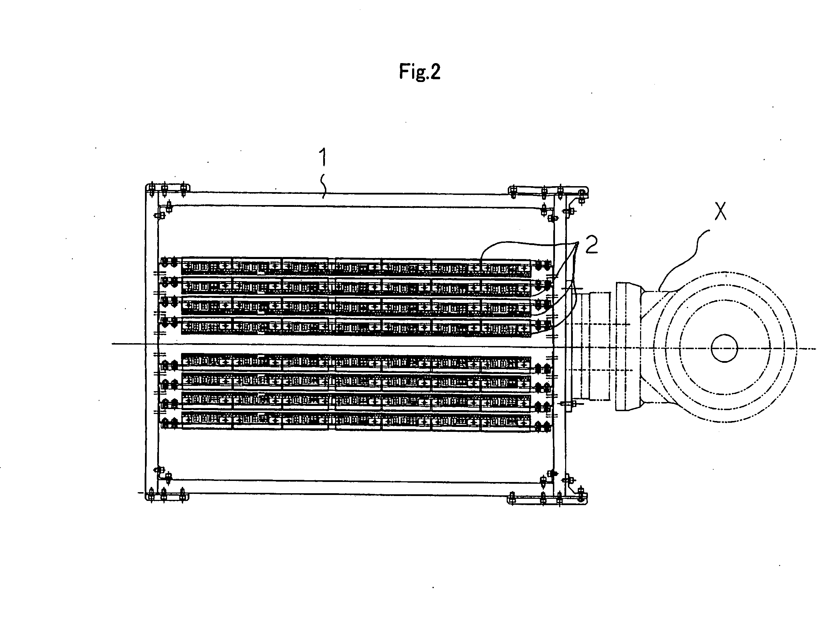

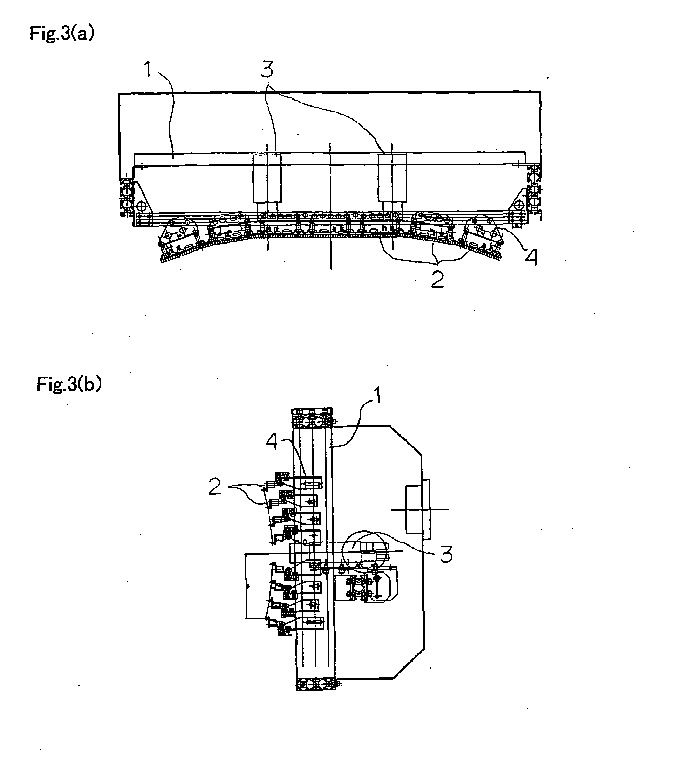

An apparatus for use in a preferred embodiment of the present invention will be described in detail. FIG. 1 and FIG.2 show an LED illumination section and camera section of a paint defect detecting machine according to the present invention. The overall configuration of the paint defect detecting machine is shown in a block diagram of FIG. 3.

An illumination unit is fitted to a robot arm. A processing method after processes with the LED illumination section and camera section is performed by a system that is substantially the same as that disclosed in any one of Patent Documents listed above.

The principle of the present invention is the use of a base board integrally having the LED illumination section and CCD camera section of an image processing apparatus mounted to an end of a robot to be one unit. The unit is operated by a robot as follows:
1) The unit is located at a right angle to a coated surface;
2) The distance between the unit and the coated surface is kept constant; and
3) The unit moves at a fixed speed relative to the coated surface.
In the present invention, the illumination section is modified to deal with, especially, multiple curved surfaces presented in the same screen of the camera view field, as follows:
4) Honeycomb type arrangement is made to be a stripe type arrangement having a certain interval; and
5) Round type LEDs are arranged to respectively have the fixed distance to the coated surface from the center of the camera view field.

The unit according to above items 4) and 5) is operated by the robot such that the movement direction of the camera and illumination section over the coated surface is perpendicular thereto.

### (Embodiment)

An illuminating method in the paint defect detecting machine of the present invention will now be described in detail hereinbelow with reference to the drawings. An illuminating method for handling multiple curved surfaces in a paint defect detecting machine in the event of inspection of a coating inspection defect of a vehicle by using the paint defect detecting machine in accordance with an image processing technique is characterized in that the illumination section and CCD camera section are integrated within a same base board (1); and the illumination section is configured such that high luminance LEDs (2) are linearly arranged into a stripe form at fixed width interval, thereby to enable arrangement of the LEDs (2) mounted onto the base board (1) such that the distance to a coated surface from the center of a camera view field is the same as that from a CCD camera (3) provided in the center of the base board, wherein an integrated unit of an illumination section formed from the thus arranged LEDs (2) and the CCD camera(s) (3) is moved by a robot unit (X) such that the coated surface and the CCD camera (3) are located perpendicular to each other.

The configuration is formed in the manner that the high luminance LEDs (2) linearly arranged into the stripe form are fitted to brackets (4) in units of plural pieces, and the brackets (4) are mounted projectively movable along the forward direction, in which the entirety of the high luminance LEDs (2) is arcuately bent.

In the case where the paint defect detecting machine is established, and the apparatus is actually manufactured and used, the present invention has industrial usability.

## Claims

1. A paint defect detecting machine for coating defect inspection of a vehicle in accordance with an image processing technique, comprising:
a base (1) ;
an illumination section and a CCD camera (3) section integrated within the base (1), the illumination section being configured by high luminance LEDs (2) linearly arranged and a robot unit (X) configured to move an integral unit of the illumination section formed from the LEDs (2) and the CCD camera(s) (3),
**characterized in that** the base is a base board (1), **in that** the LEDs (2) mounted onto the base board (1) are arranged into a stripe form at a fixed width interval and having a fixed distance to the center of a camera view field on a coated surface and **in that** the robot unit (X) is configured to move the integral unit so that the coated surface and the CCD camera(s) (3) are located perpendicular to each other.

2. The paint defect detecting machine of claim 1, wherein the robot unit (X) is configured to move the integral unit at a fixed speed relative to the coated surface.

3. The paint defect detecting machine of claim 1 or 2, wherein the entirety of the LEDs (2) is arcuately bent.

## Patentansprüche

1. Farbfehlererkennungsmaschine zur Beschichtungsfehlerprüfung eines Fahrzeuges gemäß einer Bildverarbeitungstechnik, umfassend:
eine Basis (1);
einen Beleuchtungsabschnitt und einen CCD-Kameraabschnitt (3), der in die Basis (1) integriert ist, wobei der Beleuchtungsabschnitt mit stark leuchtenden, linear angeordneten LEDs (2) versehen ist und eine Robotereinheit (X) ausgebildet ist, um eine Integraleinheit des Beleuchtungsabschnittes, der aus den LEDs (2) und der CCD-Kamera(s) (3) gebildet ist, zu bewegen,
**dadurch gekennzeichnet,**
**dass** die Basis eine Basisplatte (1) ist,
**dass** die LEDs (2), die auf der Basisplatte (1) angeordnet sind, in einer Streifenform in einem festgelegten Breitenintervall angeordnet sind und einen festgelegten Abstand zu dem Zentrum eines Kamerasehfeldes auf eine beschichtete Oberfläche haben, und
**dass** die Robotereinheit (X) ausgebildet ist, um die Integraleinheit so zu bewegen, dass die beschichtete Oberfläche und die CCD-Kamera(s) senkrecht zueinander angeordnet sind.

2. Farbfehlererkennmaschine nach Anspruch 1, bei der die Robotereinheit (X) ausgebildet ist, um die Integraleinheit mit einer festgelegten Geschwindigkeit relativ zu der beschichteten Oberfläche zu bewegen.

3. Farbfehlererkennmaschine nach Anspruch 1 oder 2, bei der die Gesamtheit der LEDs (2) bogenförmig gebogen ist.

## Revendications

1. Machine de détection des défauts de peinture destinée à inspecter des défauts de revêtement d'un véhicule conformément à une technique de traitement d'images, comprenant:
une base (1);
une section d'illumination et une section (3) de caméra CCD intégrée dans la base (1), la section d'illumination étant configurée par des diodes électroluminescentes (2) à luminance élevée agencées de manière linéaire et une unité robot (X) configurée de manière à déplacer une unité intégrale de la section d'illumination formée à partir des diodes électroluminescentes (2) et des caméra(s) CCD (3),
**caractérisée en ce que** la base est une plaque support (1), **en ce que** les diodes électroluminescentes (2) montées sur la plaque support (1) sont agencées en forme de bande à un intervalle de largeur fixe et ayant une distance fixe vers le centre d'un champ visuel de caméra sur une surface revêtue et **en ce que** l'unité robot (X) est configurée de manière à déplacer l'unité intégrale de sorte que la surface revêtue et les caméra(s) CCD (3) soient placées perpendiculairement les unes par rapport aux autres.

2. Machine de détection des défauts de peinture de la revendication 1, dans laquelle l'unité robot (X) est configurée de manière à déplacer l'unité intégrale à une vitesse fixe par rapport à la surface revêtue.

3. Machine de détection des défauts de peinture de la revendication 1 ou 2, dans laquelle l'ensemble des diodes électroluminescentes (2) sont pliées de manière arquée.
